# EUROPEAN PATENT SPECIFICATION

(11) **EP 3 318 802 B1**
(45) Date of publication and mention of the grant of the patent: **06.10.2021**
(21) Application number: 17199396.7
(22) Date of filing: 31.10.2017
(51) Int. Cl.: F23G 1/00, F23C 6/04, F23L 7/00, F23Q 7/00, A61G 17/00

(54) **CREMATORIUM FURNACE AND RELATED COFFIN FOR CORPSE CREMATION**
KREMATORIUMOFEN UND ZUGEHÖRIGER SARG ZUR LEICHENEINÄSCHERUNG
FOUR DE CRÉMATORIUM ET SON CERCUEIL POUR LA CRÉMATION D'UN CADAVRE

(30) Priority: 04.11.2016 IT 201600110894
(43) Date of publication of application: 09.05.2018
(73) Proprietor: SOL S.p.A., 20900 Monza (IT)
(72) Inventor: FARINA, Gianmario, 20129 MILANO (IT); SALA, Riccardo, 20148 MILANO (IT)
(74) Representative: Modiano, Micaela Nadia

(56) References cited:
- DE-U1- 9 312 392
- DE-U1- 20 007 693
- US-A- 1 742 868
- US-A- 2 625 121
- US-A1- 2003 101 916

## Description

The present invention relates to a crematorium furnace and to a corresponding coffin for the cremation of corpses particularly but not exclusively useful and practical in the field of cremation of human corpses in fuel-using crematorium furnaces.

In general, cremation is one of the practices in use for burial, which consists of the total or partial destruction of a corpse by combustion, i.e., the reduction to ash of a cadaver (and therefore also known as incineration), currently performed with scientific methods by means of adapted crematorium furnaces.

The goal of cremation, therefore, is to convert human or animal corpses, and the materials associated with them, into fragments of bone and other residual organic and inorganic compounds.

This reduction to ash is obtained by exposing the corpse to dehydration, evaporation and mechanical processing. The cremation process is performed at temperature that is high enough to ensure that all spores and pathogens are destroyed and the ash is completely calcined.

Since cremation is not performed on a selective basis, it is necessary to expect a broad range in the composition, weight and conditions of the corpse and of the coffin or funeral casket, which influence the characteristics of combustion and consequently the duration of the cremation process.

For this reason, a crematorium furnace must be able to work in sufficiently flexible conditions depending on the composition, weight and conditions of the material in input, which can have in each instance different characteristics.

Various types of crematorium furnaces supplied with air and fuel (for example methane, propane, LPG, oil), are currently known which have a common configuration, which substantially comprises a primary combustion chamber, a secondary (or reheating) combustion chamber, a cremation hearth and a system for distributing the combustion air.

The primary combustion chamber constitutes the actual cremation chamber, where the reduction of the corpse and of the coffin to ash and other combustion products occurs. In general, the primary chamber comprises a boxlike body of suitable dimensions, which is lined internally with a suitable refractory material, a door for the insertion of the coffin, and at least one primary burner which is supplied with air and fuel, with a power usually comprised between 200 kW and 350 kW.

The secondary combustion chamber constitutes the chamber inside which oxidation of the unburnt fraction is completed and is connected to the primary chamber by means of an exhaust gas duct which precedes the system for the discharge of the exhaust gases toward the filters and the stack. The secondary chamber also is lined internally with suitable refractory material and is provided with at least one secondary burner supplied with air and fuel, with a power usually comprised between 300 kW and 600 kW, adapted to complete the combustion of the partially oxidized unburnt fractions and to provide auxiliary fuel for the cremation process.

The cremation hearth divides the primary chamber from the secondary chamber and has a fundamental role in the optimization of the cremation process. The cremation hearth, in fact, allows the correct positioning of the coffin on the part of an operator, without particular manual interventions and without applying appreciable mechanical stresses to the primary and secondary chambers, in particular to the respective refractory internal lining.

Furthermore, by virtue of a careful choice of the construction material, the cremation hearth maximizes the flow of heat that arrives from the secondary chamber, so as to:
- optimize control of the fluids, since the hearth, heated uniformly, allows the evaporation of the liquids that form during cremation;
- increase thermal efficiency, thus facilitating the combustion of the parts that rest directly on the hearth.

Finally, in traditional crematorium furnaces, the system for distributing the combustion air constitutes the element that is adapted to supply and distribute the combustion air, which allows to supply and control the cremation process during the various steps of the cycle. The system for distribution of the combustion air comprises a blower or fan of suitable power which provides the air required for combustion. Usually, this air is distributed on multiple spatial levels in different regions of the crematorium furnace, so as to concentrates the flow of combustion air in the areas in which it is most required in each instance.

In known crematorium furnaces, a cremation process can last approximately 90 to 180 minutes, with a daily average productivity comprised between 4 and 7 cremations per day.

Air-fuel crematorium furnaces of the known type, with characteristics similar to the ones described so far, are not free from drawbacks and have aspects that can be improved in terms of productivity, efficiency and emission management.

For example, the combustion process that occurs inside them produces large volumes of exhaust gases, which, before being released into the atmosphere, must be treated adequately in apparatuses downstream of the process. These operations are necessary in order to avoid the release into the environment of volatile organic compounds (VOC in acronym) and gases, such as for example nitrogen oxides (NOx in acronym), carbon monoxide (CO in acronym), carbon dioxide (CO2 in acronym), which are one of the main forms of atmospheric pollutant. It should be noted that large volumes of exhaust gases clearly increase the complexity of the treatments downstream of the combustion process, which therefore require higher investment cost for the production of the apparatuses.

Since dry air is composed by volume of approximately 78% nitrogen (N2 in acronym) and only 21% oxygen (02 in acronym), the use of air-fuel burners, and of blowers or fans, can be inconvenient if one considers the quantities of nitrogen (N2) introduced in the process. Since only oxygen (02) takes part in the fuel oxidation reaction, the nitrogen (N2), which is useless for combustion purposes, by heating removes calories from the cremation process and reduces the residence time of the exhaust gases in the chamber, which are eliminated to the stack more rapidly. This is unfavorable for the exchange of heat with the load and furthermore nitrogen contributes to the production of so-called nitrogen oxides (NOx).

Currently, these drawbacks have been dealt with by introducing solutions adapted to optimize traditional air-fuel crematorium furnaces, which usually use blowers or fans for the combustion air. In particular it is possible to mention:
- the use of "synthetic air", i.e., a recirculated oxygen-enriched mixture of combustion gases, fed to the burners of the primary and secondary chambers, to replace the combustion air that arrives from blowers or fans;
- the use of exhaust gas recirculation systems, which allow to recirculate the high-temperature exhaust gases produced by combustion directly in the primary chamber, in order to recover their heat value;
- the use of sensors for detecting carbon monoxide (CO), managed by a programmable logic control system (PLC, Programmable Logic Controller), the latter suitable to modulate the activity of the reheating burners as a function of the detected concentration of carbon monoxide.

However, even these solutions are not free from drawbacks, since they focus mainly on the advantages that can be obtained at the level of environmental impact and on the optimization of the cremation process in terms of efficiency of heat recovery. The various steps of the cremation process instead are not dealt with in detail in order to improve their performance with benefits in terms of productivity.

US 2003/101916 discloses a crematorium furnace without injection means and ignition means.

The aim of the present invention is to overcome the limitations of the background art that have been described above, providing a crematorium furnace and a related coffin for the cremation of corpses that allow to obtain higher levels of productivity than those obtainable with known crematorium furnaces and/or similar productivity levels at a lower cost.

Within this aim, an object of the present invention is to conceive a crematorium furnace and a related coffin for the cremation of corpses that allow to accelerate a cremation process, meeting the specific requirements of the various steps of the process for the cremation of a cadaver.

Another object of the present invention is to provide a crematorium furnace and a corresponding coffin for the cremation of corpses that allow to improve the performance of crematorium furnaces, both from an operational standpoint in terms of reduction of the duration of a single cremation process and from an economic standpoint, in terms of increase in daily productivity and reduction of the use of auxiliary fuel required for the cremation process.

A further object of the present invention is to conceive a crematorium furnace and a related coffin for the cremation of corpses that allow to reduce the emissions into the environment of the exhaust gases produced by combustion, in particular reducing the volume of the volatile organic compounds and of the polluting gases produced by combustion and released into the environment.

Another object of the present invention is to provide a crematorium furnace and a related coffin for the cremation of corpses that allow to reduce the concentration of pollutants produced by combustion, with a consequent reduction of the investments required to provide the exhaust gas treatment and filtering system.

A still further object of the present invention is to provide a crematorium furnace and a related coffin for the cremation of corpses that are highly reliable, relatively simple to provide and at competitive costs.

This aim, as well as these and other objects which will become better apparent hereinafter, are achieved by a crematorium furnace, comprising a primary combustion chamber provided with a door for introducing a coffin, a secondary combustion chamber connected to said primary chamber, at least one primary burner associated with said primary chamber, at least one secondary burner associated with said secondary chamber, a cremation hearth, and a stack, characterized in that it comprises first injection means, adapted to introduce, in use, a gaseous oxidizing agent comprising oxygen directly inside said coffin, and ignition means, adapted to trigger a combustion process inside said coffin.

The intended aim and objects are also achieved by an arrangement comprising a crematorium furnace and a coffin for cremating corpses, characterized in that said coffin comprises an intake hole, which is adapted, in use, to allow the access of first injection means and of ignition means inside said coffin, and a vent hole, which is adapted to allow the exit of exhaust fumes and/or gases from the inside of said coffin, said first injection means being adapted to introduce a gaseous oxidizing agent comprising oxygen directly within said coffin, and said ignition means being adapted to trigger a combustion process inside said coffin.

The intended aim and objects are also achieved by a method for cremating corpses comprising the step of introducing a coffin in a primary combustion chamber of a crematorium furnace; characterized in that the method further comprises the steps of: accommodating first injection means and ignition means of said crematorium furnace in an intake hole of said coffin; introducing a gaseous oxidizing agent comprising oxygen directly within said coffin, by virtue of said first injection means; and triggering a combustion process inside said coffin by virtue of said ignition means.

Further characteristics and advantages of the invention will become better apparent from the description of a preferred but not exclusive embodiment of the crematorium furnace and of the related coffin for the cremation of corpses according to the invention, illustrated by way of nonlimiting example in the accompanying drawings, wherein:
Figure 1 is a schematic longitudinal sectional view of an embodiment of a crematorium furnace, according to the present invention;
Figure 2 is a schematic longitudinal sectional view of a lance of an embodiment of a crematorium furnace, according to the present invention.

With reference to the cited figures, the crematorium furnace according to the invention, designated generally by the reference numeral 10, substantially comprises a primary combustion chamber 14 provided with a door 12 for inserting a coffin 34, a secondary combustion (or reheating) chamber 18, connected to the primary chamber 14 by means of an exhaust gas duct 24, a cremation hearth 22 and a stack 26.

The crematorium furnace 10 according to the invention further comprises at least one pair of burners, in particular at least one primary burner 16 associated with the primary chamber 14 and at least one secondary burner 20 associated with the secondary chamber 18.

In a preferred embodiment of the crematorium furnace 10 according to the invention, at least one of said burners 16, 20 is of the oxycombustion type. In an even more preferred embodiment of the crematorium furnace 10 according to the invention, both of the burners 16 and 20 are of the oxycombustion type.

Oxygen is necessary for any combustion process. By increasing the concentration of oxygen that is naturally present in the combustion air by adding further oxygen with a purity comprised between 90% and 100% it is possible to achieve the benefits of oxycombustion, among which it is possible to mention: increase of the adiabatic flame temperature, improvement of the heat transmission mechanisms, optimization of combustion efficiency by virtue of the reduction of the volume of exhaust gases.

Oxycombustion is therefore a type of combustion enriched with oxygen (02), the latter contributing to increase the performance of the crematorium furnace 10 by partially or completely replacing the combustion air. Even small increases in the concentration of oxygen can entail considerable benefits on the operation of the furnace, in particular in terms of reduction of the duration of the combustion process and of increase of the productivity of the crematorium furnace.

The crematorium furnace 10 according to the invention comprises first injection means 27 and advantageously second injection means 28, for example in the form of lances, which are adapted to introduce a gaseous oxidizing agent which comprises oxygen. These operations are performed in order to accelerate some of the steps of the combustion process, consequently reducing the overall duration of the cremation process.

The above-cited gaseous oxidizing agent comprises oxygen preferably in a percentage comprised between 90% and 100% by volume.

The first injection means 27 introduce the gaseous oxidizing agent directly within the coffin 34, in order to speed up the combustion process comprised therein. To do this, the first injection means 27 are preferably installed on the back wall of the primary chamber 14, which lies opposite the door 12.

In one embodiment of the invention, the crematorium furnace 10 can comprise advantageously second injection means 28, which introduce the gaseous oxidizing agent in the primary chamber 14, in particular in the space between the refractory internal lining and the outside of the coffin 34, in order to speed up the combustion process comprised therein. To do this, the injection means 28 are preferably installed on a vault of the primary chamber 14.

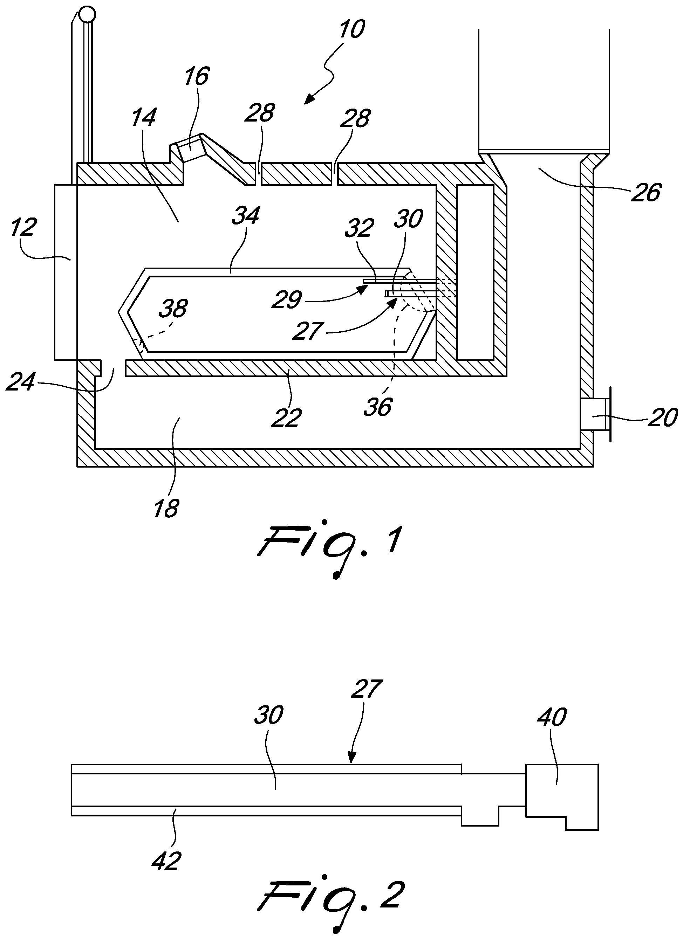

The gaseous oxidizing agent reaches the first injection means 27 and the second injection means 28 by means of a corresponding system of ducts, not shown in Figure 1.

In a preferred embodiment of the crematorium furnace 10 according to the invention, the first injection means 27 comprise at least one injection lance 30, which is adapted to introduce the gaseous oxidizing agent directly into the coffin 34.

The injection lance 30 comprises a longitudinally extended hollow body. Preferably, the injection lance 30 comprises a hollow cylindrical body or tube which is longitudinally extended.

In order to extend its operating life, the injection lance 30 is preferably made of stainless steel, carbon steel or metallic superalloys adapted to maintain good mechanical strength and corrosion resistance even at the high operating temperatures of a crematorium furnace. Also to increase its operating life, the injection lance 30 advantageously comprises a cooling jacket 42, for example a water-based one.

In order to increase the safety of the crematorium furnace 10 according to the invention, one end of the injection lance 30 advantageously comprises a UV scanner 40, for example suitable to detect the presence of a trigger flame inside the coffin 34 and to enable the injection of the gaseous oxidizing agent comprising oxygen.

The first injection means 27, i.e., the injection lance 30, can introduce the gaseous oxidizing agent directly within the coffin 34 by using a coffin 34 that is appropriately modified and described in the continuation of the present description.

The crematorium furnace 10 further comprises ignition means 29, which are adapted to trigger a combustion process inside the coffin 34, in order to speed up the combustion process comprised therein. To be able to do this, the ignition means 29 are preferably installed on the back wall of the primary chamber 14, which lies opposite the door 12.

Preferably, the first injection means 27 and the ignition means 29 are mutually arranged proximate to the back wall of the primary chamber 14.

In a preferred embodiment of the crematorium furnace 10 according to the invention, the ignition means 29 comprise at least one ignition plug 32, which is adapted to trigger a combustion process inside the coffin 34.

The ignition plug 32 comprises a longitudinally extended body. Preferably, the injection lance 30 comprises a longitudinally extended cylindrical body.

The ignition plug 32 preferably comprises a high-temperature electric resistance heater provided with interspaces adapted to preheat small volumes of air, which arrives for example from a compressed air supply circuit for the actuation of pneumatic valves.

The ignition means 29, i.e., the ignition plug 32, by virtue of the high-temperature preheating of the air, contribute to generate fuel locally starting from the internal surface of the wood and provide a suitable trigger for the secondary flame front.

Since the combustion phenomenon inside the coffin 34 is regulated by forced convection mechanisms, the ignition means 29, i.e., the ignition plug 32, furthermore allow to avoid flame quenching and to ensure locally the onset of stoichiometric conditions which locally trigger a combustion process.

The ignition means 29, i.e., the ignition plug 32, can trigger a combustion process inside the coffin 34 by using a coffin 34 that is appropriately modified and described in the continuation of the present description.

In a preferred embodiment of the invention, the crematorium furnace 10 further comprises a continuous exhaust gas analysis system installed in the stack 26, comprising for example a laser system for detecting carbon monoxide (CO) and oxygen (O2), or a sensor for gases and volatile substances based on zinc oxide nanostructures (ZnO in acronym).

The coffin 34 for the cremation of corpses according to the invention comprises an intake hole 36 for the accommodation of the first injection means 27 and of the ignition means 29. In practice, the intake hole 36 is suitable to allow access to the inside of the coffin 34 on the part of the first injection means 27, i.e., of the injection lance 30, and of the ignition means 29, i.e., of the ignition plug 32.

The coffin 34 for the cremation of corpses according to the invention comprises a vent hole 38, which is adapted to allow the escape from the inside of the coffin 34 of the exhaust gases and/or fumes, which are produced for example by the combustion performed by a secondary flame front that is generated and operates therein.

The provision of the vent hole 38 is necessary to avoid the pressurization of the coffin 34 following the injection of the volumes of gaseous oxidizing agent on the part of the injection lance 30 and the evolution of the combustion gases.

In a preferred embodiment of the coffin 34 according to the invention, the intake hole 36 and the vent hole 38 each comprise a respective dome made of low-melting material, i.e., a material that has a melting point at temperatures lower than 150°C.

In one embodiment of the coffin 34 according to the invention, the low-melting material can be of the metallic type, such as for example zinc. In another embodiment of the coffin 34 according to the invention, the low-melting material can be of the polymeric type, such as for example high-density polyethylene.

This allows, outside the crematorium furnace, to protect the operator from any biological risks, once the coffin 34 has been sealed prior to the cremation process; and in the high-temperature primary chamber 14 allows to inject the gaseous oxidizing agent directly and trigger a combustion process inside the coffin 34 once it has been arranged on the cremation hearth 22 and pushed toward the back wall of the primary chamber 14, which lies opposite the door 12.

The access of the first injection means 27, i.e., of the injection lance 30, and of the ignition means 29, i.e., of the ignition plug 32, to the inside of the coffin 34 occurs when the intake hole 36 and the vent hole 38 open as a consequence of the melting of their respective domes. This melting of the domes occurs substantially instantaneously when the coffin 34 is inserted in the primary chamber 14 heated to a temperature higher than 850°C.

The ignition and shutdown of the burners 16, 20 are managed by a programmable logic control system (PLC, Programmable Logic Controller) on the basis of the data that arrive from a temperature transmitter that is installed preferably on the vault of the primary chamber 14 and/or on the basis of the concentration of carbon monoxide (CO) and oxygen (02) detected by the exhaust gas analysis system installed on the stack 26.

The modulation of the flow-rates of the injection means 28, 30 is regulated by modulating valves, which also are managed by a programmable logic control system (PLC) on the basis of the data that arrive from a temperature transmitter that is installed preferably on the vault of the primary chamber 14 and/or on the basis of the concentration of volatile organic compounds (VOC) detected by the exhaust gas analysis system installed on the stack 26.

These systems, appropriately activated depending on the various requirements of the individual cremation processes, help to accelerate the reaction rate of the combustion process and to provide auxiliary fuel only in the steps that require it.

The operation of an embodiment described above of the crematorium furnace 10 according to the invention is as follows.

Generally, in the case of multiple cremations, the process for cremation in fuel-using crematorium furnaces can be broken down into the following steps: a) ignition and preheating of the primary chamber 14 and secondary chamber 18 until a temperature of approximately 850°C is reached; b) loading a coffin or funeral casket 34; c) triggering and development of the combustion process; d) collection of the ash produced by the cremation process; e) restoring the temperature in the primary chamber 14 and the secondary chamber 18; f) repetition of steps b) to e); g) final cooling and shutdown.

In greater detail, step c) for triggering and developing the combustion process can be broken down further into the following consecutive substeps: c1) combustion of the external covering of the coffin 34 (for example lacquer, enamel, etc.; c2) combustion of the external layer of wood of the coffin 34: c3) combustion of the internal layer of wood of the coffin 34 and the trimmings (for example paddings, etc.); c4) combustion of the remaining wood and of the tissues of the corpse; c5) calcination of the bones of the corpse.

Starting from these general steps, the present invention deals with the cremation process by analyzing the individual sequential steps that compose it and which each have specific requirements and different or mutually antithetic characteristics.

The step of ignition and preheating of the crematorium furnace 10 provides for heating the primary chamber 14 and the secondary chamber 18, by means of the respective primary burner 16 and secondary burner 20, up to a temperature of approximately 850°C.

In comparison with known air-fuel crematorium furnaces, within the scope of the present invention the times for reaching these temperatures can be reduced up to 20% by virtue of the use of oxycombustion.

At the end of the ignition and preheating staff, the primary burner 16 and optionally the secondary burner 20 are temporarily shut down and an operator rapidly proceeds with the insertion of the coffin 34 in the crematorium furnace 10, through the appropriately provided door 12, and with its arrangement on the cremation hearth 22.

Once the melting of the domes made of low-melting material, arranged respectively at the intake hole 36 and at the vent hole 38, is completed, the operator pushes the coffin 34 toward the back wall of the primary chamber 14, in order to allow the access of the injection lance 30 and of the ignition plug 32 to the inside of the coffin 34, passing through the intake hole 36.

Once the coffin 34 has been loaded, the step for triggering and developing the process for the combustion of the coffin 34 and of the corpse begins and provides for the reignition of the primary burner 16 and optionally of the secondary burner 20.

The substeps of combustion of the covering of the coffin 34 and of the external layer of wood that constitutes it are usually steps in which it is not necessary to add auxiliary fuel.

On the contrary, the contribution of the oxidizer can be decisive: using a gaseous oxidizing agent which comprises oxygen in a variable percentage, preferably comprised between 90% and 100% by volume, instead of ordinary air, in fact allows to reduce the time required to complete the combustion of these materials.

This gaseous oxidizing agent is introduced in the primary chamber 14 through the adapted second injection means 28, which are installed on the vault of the primary chamber 14 in order to create an appropriate turbulence.

The duration of combustion is in fact also linked to the speed with which the flame front in the primary combustion chamber 14 propagates through the material. By imparting turbulence inside the primary chamber 14, this speed increases considerably, by virtue of a greater contact surface and a better mixing between the oxidizer and the fuel; the speed of motion of the gaseous oxidizing agent further contributes to the "transport" of said flame.

The position of the second injection means 28 on the vault of the primary chamber 14 and inside the corresponding refractory internal lining, their mutual distance, their inclination with respect to the horizontal longitudinal axis, their output cross-section and the construction material can vary as a function of the characteristics and of the potential of the embodiment of the crematorium furnace 10, in particular as a function of the geometry of the primary combustion chamber 14.

The substeps of combustion of the internal layer of wood of the coffin 34 and of the trimmings, and of the tissues of the body, are steps the beginning of which is normally dependent upon the failure of the wooden structure of the coffin 34.

Within the scope of the present invention, parallel to the flame front that is external to the coffin 34 a secondary flame front is generated directly inside the coffin 34 and begins to propagate prior to the collapse of the wooden structure of the coffin 34, in order to speed up the completion of the combustion process.

For this purpose, upon the melting of the respective domes of the lance entry point 36 and of the venting point 38, which as mentioned occurs substantially instantaneously when the coffin 34 is inserted in the primary chamber 14 heated to a temperature of approximately 850°C, the injection lance 30 and the ignition plug 32 access the inside of the coffin 34, in particular through the intake hole 36.

The introduction of the gaseous oxidizing agent inside the coffin 34 by means of the injection lance 30 provides the oxidizer required for the support of the secondary flame front that is generated.

With reference to a generic wood combustion process, the gasification of wood with oxygen (O2), and the consequent forming of combustible gases, such as for example carbon monoxide (CO) and hydrocarbons (CnHm), and of solid coal, occurs at approximately 250°C.

Locally, this temperature can be reached easily by the wood of the inner layer of the coffin 34, which is a few centimeters away from the stream of air heated by the ignition plug 32.

The substep of calcining the bones of the corpse requires, differently from the preceding steps, a variable quantity of auxiliary fuel and even higher temperatures in order to be completed.

In comparison with known air-fuel crematorium furnaces, within the scope of the present invention the times for the step of ignition and development of the combustion process, up to bone calcination, can be reduced up to 15%.

At the end of the process for the combustion of the coffin 34 and of the corpse, the primary burner 16 and optionally the secondary burner 20 are shut down temporarily, and an operator proceeds with the collection of the ashes produced by the cremation process. The ashes that arrive from calcination, the last step of the combustion process, are left to cool down for 30-60 minutes before being able to pass to the collection step.

After the collection of the cremation ashes, the step for restoring the temperature in the primary chamber 14 and the second chamber 18 provides for the reignition of the primary burner 16 and optionally of the secondary burner 20 and by virtue of oxycombustion this step can be completed in times reduced by up to 20% with respect to known air-fuel cremation furnaces.

The results obtained by the present invention have been verified also by CFD (Computational Fluid Dynamics) modeling, with the numeric study of the cremation process and the predictive assessment of the advantages, in terms of overall duration of the process, that can be achieved by virtue of the localized feeds of oxygen (O2) within the primary chamber 14 and the secondary chamber 18.

The fluid dynamics analysis of the cremation process was performed with the use of the FDS (Fire Dynamic Simulator) numeric tool for the analysis of fire-driven flows. This tool is optimum in the simulation of the cremation process, the formulation of which is inherently nonstationary, since the process is completely controlled by the consumption of material and consequently by time.

Ordinary combustion, with the air as oxidizer, and oxycombustion, with the above-cited oxidizing agent comprising oxygen (O2) from 90% to 100% as oxidizer, in layouts of crematorium furnaces with configurations that are similar to the one given in the present description, have been assessed and compared respectively.

It has therefore been possible to generate a chart of the percentage reduction of the duration of the cremation process as a function of the percentage of oxygen comprised in the oxidizer agent, which allowed to verify that it is possible to appreciate an increase in speed in the pyro-gasification process as the oxygen concentration increases.

The results obtained further indicate that the phenomenon of combustion inside the coffin 34 is sensitive to the flow-rates of air or oxygen, which must be selected accurately to avoid flame quenching.

The simulation of oxycombustion within the scope of the present invention has furthermore allowed to point out the simultaneous combustion of the external coffin and of the internal corpse, which allows to achieve a minimum time reduction of the cremation process on the order of 15%.

In practice it has been found that the invention achieves fully the intended aim and objects. In particular it has been shown that the crematorium furnace and the related coffin for the cremation of corpses thus conceived allow to overcome the quality limitations of the background art, since they allow to obtain higher levels of productivity than those obtainable with known crematorium furnaces and/or similar productivity levels at a lower cost; in practice, it is possible to achieve a significant increase in daily productivity of a crematorium furnace of up to 15-20%, in terms of number of cremations per day, by virtue of the reduction of the duration of the individual cremations.

Another advantage of the crematorium furnace and of the related coffin for cremating corpses according to the present invention resides in that they allow to accelerate the cremation process, complying with the specific requirements of the various transient conditions starting from an analysis of the various sequential steps that compose the cremation process.

A further advantage of the crematorium furnace and of the related coffin for the cremation of corpses according to the present invention resides in that they allow to improve the performance of crematorium furnaces from an operational standpoint, in terms of reduction of the duration of the cremation process, by virtue of the reduction of the duration of the individual steps that compose it, which is due to the generation of a secondary flame front inside the coffin, which is supported and accelerated by the internal injection of oxygen (O2), and the optional synergistic use of oxycombustion burners. In particular, in fact, in the preferred configuration, the invention allows also to reduce the calcination times of bones, by virtue of the use of oxycombustion burners.

Another advantage of the crematorium furnace and of the related coffin for the cremation of corpses according to the present invention resides in that they allow to improve the performance of crematorium furnaces from an economic standpoint in terms of increase in daily productivity and reduction of the use of auxiliary fuel that is required for the cremation process, by virtue of the advantages that arise from oxycombustion and the optional injection of oxygen (O2) directly into the coffin.

A further advantage of the crematorium furnace and of the related coffin for cremating corpses according to the present invention, if the configuration of the crematorium furnace does not provide for the use of combustion air that arrives from blowers or fans, resides in that they allow to reduce the volume of exhaust gases evacuated at the stack by virtue of the elimination of nitrogen. This, consequently, is beneficial to the combustion process, in terms of higher thermal efficiency, and to environmental emissions in terms of reduction of volatile organic compounds and of oxide nitrogen oxides (Nox) that are produced during the process.

A still further advantage of the crematorium furnace and of the related coffin for cremating corpses according to the present invention resides in that they allow to reduce the concentration of the pollutants produced by combustion, with a consequent reduction of the investments required to provide the system for treating and filtering the exhaust gases. In particular, the invention allows to reduce emissions of nitrogen oxides (NOx), by virtue of the elimination of the need for air for the combustion provided by a blower or fan.

In summary, by reducing or eliminating the introduction of inert nitrogen (N2) in the crematorium furnace, it has been demonstrated that it is possible to increase production and reduce emissions and auxiliary fuel consumption.

Although the crematorium furnace and the corresponding coffin for the cremation of corpses according to the invention have been conceived in particular for the cremation of human corpses in fuel-using crematorium furnaces, it can in any case be used, more generally, for cremating both human corpses and animal corpses in fuel-using crematorium furnaces.

The invention thus conceived is susceptible of numerous modifications and variations, all of which are within the scope of the appended claims; by way of nonlimiting example, the person skilled in the art understands without effort that it is also possible to provide an electromechanical system or device for the emergency shutdown of the crematorium furnace with a structure according to the invention. All the details may furthermore be replaced with other technically equivalent elements.

In practice, the materials used, as well as the contingent shapes and dimensions, may be any according to the requirements and the state of the art.

To conclude, the scope of the protection of the claims must not be limited by the illustrations or preferred embodiments shown in the description by way of example, but rather the claims must comprise all the characteristics of patentable novelty that reside in the present invention.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A crematorium furnace (10), comprising a primary combustion chamber (14) provided with a door (12) for introducing a coffin (34), a secondary combustion chamber (18) connected to said primary chamber (14), at least one primary burner (16) associated with said primary chamber (14), at least one secondary burner (20) associated with said secondary chamber (18), a cremation hearth (22), and a stack (26), **characterized in that** it comprises first injection means (27), adapted to introduce, in use, a gaseous oxidizing agent comprising oxygen directly inside said coffin (34), and ignition means (29), adapted to trigger a combustion process inside said coffin (34).

2. The crematorium furnace (10) according to claim 1 , **characterized in that** said first injection means (27) and said ignition means (29) are installed on the back wall of said primary chamber (14).

3. The crematorium furnace (10) according to one or more of the preceding claims, **characterized in that** said first injection means (27) comprise at least one injection lance (30).

4. The crematorium furnace (10) according to claim 3, **characterized in that** said injection lance (30) comprises a cooling jacket (42).

5. The crematorium furnace (10) according to claim 3 or 4, **characterized in that** one end of said injection lance (30) comprises a UV scanner (40).

6. The crematorium furnace (10) according to one or more of the preceding claims, **characterized in that** said ignition means (29) comprise at least one ignition plug (32).

7. The crematorium furnace (10) according to claim 6, **characterized in that** said ignition plug (32) comprises a high-temperature electric resistance heater provided with interspaces that are adapted to preheat small volumes of air.

8. The crematorium furnace (10) according to one or more of the preceding claims, **characterized in that** it comprises further second injection means (28), which are adapted to introduce said gaseous oxidizing agent comprising oxygen within said primary chamber (14).

9. The crematorium furnace (10) according to claim 8, **characterized in that** said second injection means (28) are installed on a vault of said primary chamber (14).

10. The crematorium furnace (10) according to one or more of the preceding claims, **characterized in that** said primary burner (16) and said secondary burner (20) are of the oxycombustion type.

11. The crematorium furnace (10) according to one or more of the preceding claims, **characterized in that** it further comprises a system for the continuous analysis of exhaust gases which is installed in said stack (26).

12. An arrangement comprising a crematorium furnace and a coffin (34) for cremating corpses, **characterized in that** said coffin comprises an intake hole (36), which is adapted, in use, to allow the access of first injection means (27) and of ignition means (29) inside said coffin (34), and a vent hole (38), which is adapted to allow the exit of exhaust fumes and/or gases from the inside of said coffin (34), said first injection means (27) being adapted to introduce a gaseous oxidizing agent comprising oxygen directly within said coffin (34), and said ignition means (29) being adapted to trigger a combustion process inside said coffin (34), said coffin being inserted, in use, in a crematorium furnace having said first injection means (27) that comprise at least one injection lance (30) and having said ignition means (29) that comprise at least one ignition plug (32).

13. The arrangement according to claim 12, **characterized in that** said intake hole (36) and said vent hole (38) each comprise a respective dome made of low-melting material.

14. A method for cremating corpses comprising the step of:
- introducing a coffin (34) in a primary combustion chamber (14) of a crematorium furnace (10); **characterized in that** the method further comprises the steps of:
- accommodating first injection means (27) and ignition means (29) of said crematorium furnace (10) in an intake hole (36) of said coffin (34);
- introducing a gaseous oxidizing agent comprising oxygen directly within said coffin (34), by virtue of said first injection means (27);
- triggering a combustion process inside said coffin (34) by virtue of said ignition means (29).

15. The method according to claim 14, **characterized in that** said gaseous oxidizing agent comprises oxygen in a percentage comprised between 90% and 100% by volume.

## Patentansprüche

1. Ein Krematoriumofen (10), der Folgendes umfasst: einen ersten Feuerraum (14), ausgestattet mit einer Tür (12) zum Einführen eines Sargs (34), einen zweiten Feuerraum (18), der mit dem ersten Raum (14) verbunden ist, mindestens einen ersten Brenner (16), der mit dem ersten Raum (14) verbunden ist, mindestens einen zweiten Brenner (20), der mit dem zweiten Raum (18) verbunden ist, einen Einäscherungsherd (22) und einen Schornstein (26); **dadurch gekennzeichnet, dass** er erste Injektionsmittel (27), die ausgebildet sind, um im Gebrauch ein gasförmiges Oxidationsmittel, das Sauerstoff umfasst, direkt in den Sarg (34) einzuleiten, und Zündungsmittel (29) umfasst, ausgebildet, um einen Verbrennungsprozess innerhalb des Sargs (34) auszulösen.

2. Der Krematoriumofen (10) gemäß Anspruch 1, **dadurch gekennzeichnet, dass** die ersten Injektionsmittel (27) und die Zündungsmittel (29) an der Rückwand des ersten Raums (14) angebracht sind.

3. Der Krematoriumofen (10) gemäß einem oder mehreren der obigen Ansprüche, **dadurch gekennzeichnet, dass** die ersten Injektionsmittel (27) mindestens eine Injektionslanze (30) umfassen.

4. Der Krematoriumofen (10) gemäß Anspruch 3, **dadurch gekennzeichnet, dass** die Injektionslanze (30) einen Kühlmantel (42) umfasst.

5. Der Krematoriumofen (10) gemäß Anspruch 3 oder 4, **dadurch gekennzeichnet, dass** ein Ende der Injektionslanze (30) einen UV-Scanner (40) umfasst.

6. Der Krematoriumofen (10) gemäß einem oder mehreren der obigen Ansprüche, **dadurch gekennzeichnet, dass** die Zündungsmittel (29) mindestens eine Zündkerze (32) umfassen.

7. Der Krematoriumofen (10) gemäß Anspruch 6, **dadurch gekennzeichnet, dass** die Zündkerze (32) eine Hochtemperatur-Widerstandsheizung umfasst, die mit Zwischenräumen versehen ist, welche ausgebildet sind, um geringe Volumina von Luft vorzuerhitzen.

8. Der Krematoriumofen (10) gemäß einem oder mehreren der obigen Ansprüche, **dadurch gekennzeichnet, dass** er weiter zweite Injektionsmittel (28) umfasst, die ausgebildet sind, um das gasförmige Oxidationsmittel, das Sauerstoff umfasst, in den ersten Raum (14) einzuleiten.

9. Der Krematoriumofen (10) gemäß Anspruch 8, **dadurch gekennzeichnet, dass** die zweiten Injektionsmittel (28) auf einer Wölbung des ersten Raumes (14) installiert sind.

10. Der Krematoriumofen (10) gemäß einem oder mehreren der obigen Ansprüche, **dadurch gekennzeichnet, dass** der erste Brenner (16) und der zweite Brenner (20) vom Sauerstoffverbrennungstyp sind.

11. Der Krematoriumofen (10) gemäß einem oder mehreren der obigen Ansprüche, **dadurch gekennzeichnet, dass** er weiter ein System zur kontinuierlichen Analyse von Abgasen umfasst, das in dem Schornstein (26) installiert ist.

12. Eine Anordnung, die einen Krematoriumofen und einen Sarg (34) zur Verbrennung von Leichnamen umfasst, **dadurch gekennzeichnet, dass** der Sarg ein Einlassloch (36) umfasst, das ausgebildet ist, um im Gebrauch den Einlass erster Injektionsmittel (27) und Zündungsmittel (29) in den Sarg (34) zu ermöglichen, und ein Belüftungsloch (38), das ausgebildet ist, um den Austritt von Abgasen und/oder anderen Gasen aus dem Inneren des Sargs (34) zu ermöglichen; wobei die ersten Injektionsmittel (27) ausgebildet sind, um ein gasförmiges Oxidationsmittel, das Sauerstoff umfasst, direkt in den Sarg (34) einzuspritzen; und die Zündungsmittel (29) ausgebildet sind, um einen Verbrennungsprozess innerhalb des Sargs (34) auszulösen; wobei der Sarg im Gebrauch in einen Krematoriumofen mit den ersten Injektionsmitteln (27), die mindestens eine Injektionslanze (30) umfassen, und mit den Zündungsmitteln (29) eingeführt wird, die mindestens eine Zündkerze (32) umfassen.

13. Die Anordnung gemäß Anspruch 12, **dadurch gekennzeichnet, dass** das Einlassloch (36) und das Belüftungsloch (38) jeweils eine dazugehörige Haube aus tiefschmelzendem Material umfassen.

14. Ein Verfahren zum Verbrennen von Leichnamen, das folgenden Schritt umfasst:
- das Einführen eines Sargs (34) in einen ersten Feuerraum (14) eines Krematoriumofens (10); **dadurch gekennzeichnet, dass** das Verfahren weiter folgende Schritte umfasst:
- das Einführen von ersten Injektionsmitteln (27) und Zündungsmitteln (29) des Krematoriumofens (10) in ein Einlassloch (36) des Sargs (34);
- das Einleiten eines gasförmigen Oxidationsmittels, das Sauerstoff umfasst, direkt in den Sarg (34) mit Hilfe der ersten Injektionsmittel (27);
- das Auslösen eines Verbrennungsprozesses innerhalb des Sargs (34) mit Hilfe der Zündungsmittel (29).

15. Das Verfahren gemäß Anspruch 14, **dadurch gekennzeichnet, dass** das gasförmige Oxidationsmittel Sauerstoff in einem Prozentsatz zwischen 90 und 100 Volumenprozent umfasst.

## Revendications

1. Four de crématorium (10), comportant une chambre de combustion primaire (14) pourvue d'une porte (12) pour introduire un cercueil (34), une chambre de combustion secondaire (18) reliée à ladite chambre primaire (14), au moins un brûleur primaire (16) associé à ladite chambre primaire (14), au moins un brûleur secondaire (20) associé à ladite chambre secondaire (18), une sole de crémation (22) et une cheminée (26), **caractérisé en ce qu'**il comporte des premiers moyens d'injection (27), adaptés pour introduire, en utilisation, un agent oxydant gazeux comportant de l'oxygène directement à l'intérieur dudit cercueil (34), et des moyens d'allumage (29), adaptés pour déclencher un processus de combustion à l'intérieur dudit cercueil (34).

2. Four de crématorium (10) selon la revendication 1, **caractérisé en ce que** lesdits premiers moyens d'injection (27) et lesdits moyens d'allumage (29) sont installés sur la paroi arrière de ladite chambre primaire (14).

3. Four de crématorium (10) selon une ou plusieurs des revendications précédentes, **caractérisé en ce que** lesdits premiers moyens d'injection (27) comportent au moins une lance d'injection (30).

4. Four de crématorium (10) selon la revendication 3, **caractérisé en ce que** ladite lance d'injection (30) comporte une chemise de refroidissement (42).

5. Four de crématorium (10) selon la revendication 3 ou 4, **caractérisé en ce qu'**une extrémité de ladite lance d'injection (30) comporte un scanner UV (40).

6. Four de crématorium (10) selon une ou plusieurs des revendications précédentes, **caractérisé en ce que** lesdits moyens d'allumage (29) comportent au moins une bougie d'allumage (32).

7. Four de crématorium (10) selon la revendication 6, **caractérisé en ce que** ladite bougie d'allumage (32) comporte une résistance électrique chauffante à haute température pourvue d'espacements qui sont adaptés pour préchauffer de petits volumes d'air.

8. Four de crématorium (10) selon une ou plusieurs des revendications précédentes, **caractérisé en ce qu'**il comporte en outre des seconds moyens d'injection (28), qui sont adaptés pour introduire ledit agent oxydant gazeux comportant de l'oxygène à l'intérieur de ladite chambre primaire (14).

9. Four de crématorium (10) selon la revendication 8, **caractérisé en ce que** lesdits seconds moyens d'injection (28) sont installés sur une voûte de ladite chambre primaire (14).

10. Four de crématorium (10) selon une ou plusieurs des revendications précédentes, **caractérisé en ce que** ledit brûleur primaire (16) et ledit brûleur secondaire (20) sont du type à oxycombustion.

11. Four de crématorium (10) selon une ou plusieurs des revendications précédentes, **caractérisé en ce qu'**il comporte en outre un système pour l'analyse continue de gaz d'échappement qui est installé dans ladite cheminée (26).

12. Agencement comportant un four de crématorium et un cercueil (34) pour incinérer des corps, **caractérisé en ce que** ledit cercueil comporte un trou d'admission (36), qui est adapté, en utilisation, pour permettre l'accès de premiers moyens d'injection (27) et de moyens d'allumage (29) à l'intérieur dudit cercueil (34), et un trou d'évent (38), qui est adapté pour permettre la sortie de fumées et/ou de gaz d'échappement provenant de l'intérieur dudit cercueil (34), lesdits premiers moyens d'injection (27) étant adaptés pour introduire un agent oxydant gazeux comportant de l'oxygène directement à l'intérieur dudit cercueil (34), et lesdits moyens d'allumage (29) étant adaptés pour déclencher un processus de combustion à l'intérieur dudit cercueil (34), ledit cercueil étant inséré, en utilisation, dans un four de crématorium ayant lesdits premiers moyens d'injection (27) qui comportent au moins une lance d'injection (30) et ayant lesdits moyens d'allumage (29) qui comportent au moins une bougie d'allumage (32).

13. Agencement selon la revendication 12, **caractérisé en ce que** ledit trou d'admission (36) et ledit trou d'évent (38) comportent chacun un dôme respectif constitué d'un matériau à bas point de fusion.

14. Procédé pour incinérer des corps comportant l'étape consistant à :
- introduire un cercueil (34) dans une chambre de combustion primaire (14) d'un four de crématorium (10), **caractérisé en ce que** le procédé comporte en outre les étapes consistant à :
- recevoir des premiers moyens d'injection (27) et des moyens d'allumage (29) dudit four crématoire (10) dans un trou d'admission (36) dudit cercueil (34),
- introduire un agent oxydant gazeux comportant de l'oxygène directement à l'intérieur dudit cercueil (34), par lesdits premiers moyens d'injection (27),
- déclencher un processus de combustion à l'intérieur dudit cercueil (34) par lesdits moyens d'allumage (29).

15. Procédé selon la revendication 14, **caractérisé en ce que** ledit agent oxydant gazeux comporte de l'oxygène dans un pourcentage compris entre 90 % et 100 % en volume.
